Europäisches Patentamt

European Patent Office

Office européen des brevets

(11) Publication number: **0 390 411**
**A2**

# EUROPEAN PATENT APPLICATION

(21) Application number: **90303026.0**

(22) Date of filing: **21.03.90**

(51) Int. Cl.5: **B26D 1/18, B26D 11/00**

(30) Priority: **30.03.89 FI 891532**

(43) Date of publication of application:
**03.10.90 Bulletin 90/40**

(84) Designated Contracting States:
**AT DE ES FR GB IT SE**

(71) Applicant: **VALMET-AHLSTROM INC.**

**SF-48601 Karhula(FI)**

(72) Inventor: **Salmela, Juha**
**Korsulankatu 1 A2**
**SF-48600 Karhula(FI)**

(74) Representative: **Gilmour, David Cedric**
**Franklyn et al**
**POTTS, KERR & CO. 15 Hamilton Square**
**Birkenhead Merseyside L41 6BR(GB)**

(54) Web cutting apparatus.

(57) The present invention relates to a web cutting apparatus for cutting sheet material travelling as a continuous plane, the material being such as a chemical-pulp or board web, said cutting apparatus comprising a carriage plate (16), which is displaceably supported on a guide rail assembly (17), which rail (17) extends across the moving pulp or board web (W), and which carriage plate (16) supports on its side opposite to rail (17) a slide rest arrangement (13). The slide rest (13) is pivoted (11) to be rotatable ($S_1$) in the plane of the web (W) and compared with the moving direction (P) of the web, and the pivot pin is perpendicular to the web plane, whereupon in a cutting operation a movement ($S_4$) on the plane of the web material (W) to be cut is imparted to the cutting blade (10) so that in the cutting operation the cutting blade (10) returns automatically to the optimum cutting direction (C).

## WEB CUTTING APPARATUS

The present invention relates to a web cutting apparatus for cutting sheet material travelling as a continuous plane, the material being one such as a chemical-pulp or board web, said cutting apparatus comprising a carriage plate which is displaceably supported on one side on a guide rail assembly, which rail assembly extends across the moving pulp or board web perpendicularly to its travelling direction, and which carriage plate supports a slide rest arrangement on its side opposite to the guide rail.

Previously known cutting blades or knives for cutting web or other material are disclosed e.g. in patents SE-366272, DE-266764, EP-40264 and GB-1531158, wherein the cutting blade or knife is displaceable by being mounted on a pivoted arm, and wherein a pivoted shaft is located in front or upstream relative to the cutting point.

The previously known apparatus disclosed in GB-patent 1531158 is meant for cutting of thin sheet material resting on a horizontal plane, wherein the cut is made along predetermined cutting lines. This previously known apparatus is suitable for cutting of linoleum floor coverings, vinyl floor coverings, cardboard and the like. This previously known apparatus comprises a set of x-y coordinate guides for positioning of the cutting point, a carriage moving on the guide rail, and a cutting tool supported by the carriage. The cutting tool further comprises a disc knife blade and a separate counter knife blade which raises the sheet material from the plane at the cutting point, a pivoted shaft and a device for angular adjustment.

Patents EP-40264, SE-366272 and DE-266764 disclose prior art solutions in which the travelling web is cut with a fixed cutter knife. In these solutions cutting always takes place in the same direction as the web travels. In patent EP-40264 a stationary cutter knife is being used, whereas the blade in SE and DE patents is rotary.

The prior art solutions have encountered difficulties in displacing the cutter in direction transversely of the machine or travel path when the thickness of the pulp or board web to be cut is substantial and the weight per unit area has increased up to approx. 1 kilogramme per square meter. Problems have especially occurred when the material to be cut, for example a pulp or board web, has been hard and less elastic. The problems have been caused by the blade or knife pushing the edge of the web along the whole transverse cutting length when widening out the threading strip, as a result of which additional force has been required. This has led to dull and/or burned blades or knives, which is costly as the prices of cutter blades/knives are high. Further disadvantages caused by pushing are a large amount of dust and a roughly cut edge.

The object of the present invention is to provide a pulp or board web cutting blade and mounting therefor such that the disadvantages of the prior art solutions can be avoided or minimized.

A further object of the invention is to provide such a cutting blade that allows cutting in web direction and diversions of the cut sideways when the threading strip is being widened out during the cutting operation.

To achieve the objects described above and to be described later, the cutting blade according to the invention is mainly characterized in that the cutting blade is pivotally mounted on a supporting beam, which cutting blade can be deflected according to the direction of travel of the web to be cut, and that the pivot pin extends perpendicularly to the plane of the web to be cut, whereupon the cutting blade is allowed to settle on the plane of the web so as to automatically find its way to the optimum cutting direction in a cutting situation.

Other advantageous features of the invention are described in claims 2-10 and are incorporated herein by reference.

The cutting blade of the present invention gives a clean cut during the widening of the threading strip, because the side face of the blade is parallel to the diagonal cutting line. In the previously known methods the edge was often rough during the widening operation, i.e. upon moving the cutter sideways. This was since the side face of the cutting blade was pushing the edge of the web, which happened especially with heavy basis weights (over 600 grams per square meter and in particular over 1.5 kilograms per square meter). Furthermore, the use of the cutting blade of the present invention produces less tears during the process of widening the threading strip thereby reducing the number of production breaks and effecting considerable savings in cost.

Since the side face of the cutting blade is not pushing the edge of the web, dust formation remains at a low level during the cutting operation.

Remarkable savings in costs of blades are achieved with the apparatus of the present invention, because the blade does not become dull and it does not burn down as quickly as the blades disclosed in the previously known methods.

The construction of the apparatus of the present invention also allows that the drive motor needed for transverse movement need not be as powerful as the motor in the prior art solutions.

The invention is described in more detail below, by way of example, with reference to the accompanying drawings, in which:

Fig. 1 is a schematic fragmentary, perspective view of the apparatus according to the invention illustrating the cutting of the threading strip.

Fig. 2 is a schematic fragmentary, perspective view of the apparatus according to the invention illustrating a lateral movement, i.e. the widening of the threading strip.

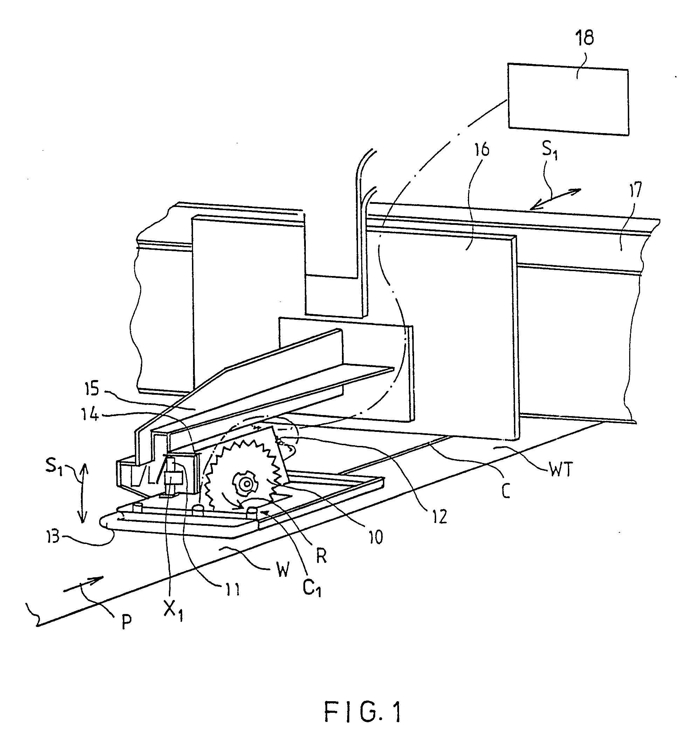

Referring to Fig. 1, the material to be cut, e.g. a pulp or board web W, travels in direction indicated by the arrow P. The cutting apparatus comprises a cutting blade 10 and a drive motor 18 therefor (shown schematically) together with a slide rest 13. The cutting apparatus is pivotally mounted for horizontal rotation on a pivot pin 11 connected to a supporting beam 15 which is further mounted on a carriage plate 16. This carriage plate is displaceably mounted by being guided along a guide rail assembly 17 which is located extending transversely to the machine or the direction of arrow P. Furthermore, the entire apparatus 10-11-13-15-16 can be tilted in the direction of arrow $S_1$ for instance to lift the cutting blade 10 up from the cutting position. The cutting blade 10 rotates in the direction indicated by arrow R. The motor 18 is of electric, pneumatic or hydraulic type. The cutting blade support 14 is connected to one end of a spring 12, which spring is connected at its opposite end to the supporting beam 15.

Fig. 1 illustrates a cutting situation where the cutting blade 10 is separating a threading strip WT, and in which situation the cutting line C, i.e. the direction of cutting, is parallel to the direction of travel P of the web W. The point where the cutting blade 10 separates the threading strip WT, i.e. the cutting point, is marked with reference $C_1$. When cutting is done parallel with the web travel direction, that is in opposite direction to the arrow P, the compression of the spring 12 is limited by a limit guard (not shown in figure) to prevent the slide rest from exceeding the angle where cutting is parallel to the movement P of the web.

The cutting blade 10 by means of the support 14 is pivotally connected by a pivot pin 11 on the beam 15 in such a way that the geometric pivoting axis $X_1$ of the pivot pin 11 is located in front of the cutting point $C_1$ with respect to the direction in which cutting proceeds (i.e. upstream of the blade) while the cutting blade 10 is working the web W. Furthermore, the blade 10 and the geometric pivoting axis $X_1$ of the pivot pin 11 are located at a distance from another, measured in the lateral direction or perpendicularly to the direction of travel P of the web W.

The geometric pivoting axis $X_1$ of the pivot pin 11 is positioned so as to extend perpendicularly to the web plane.

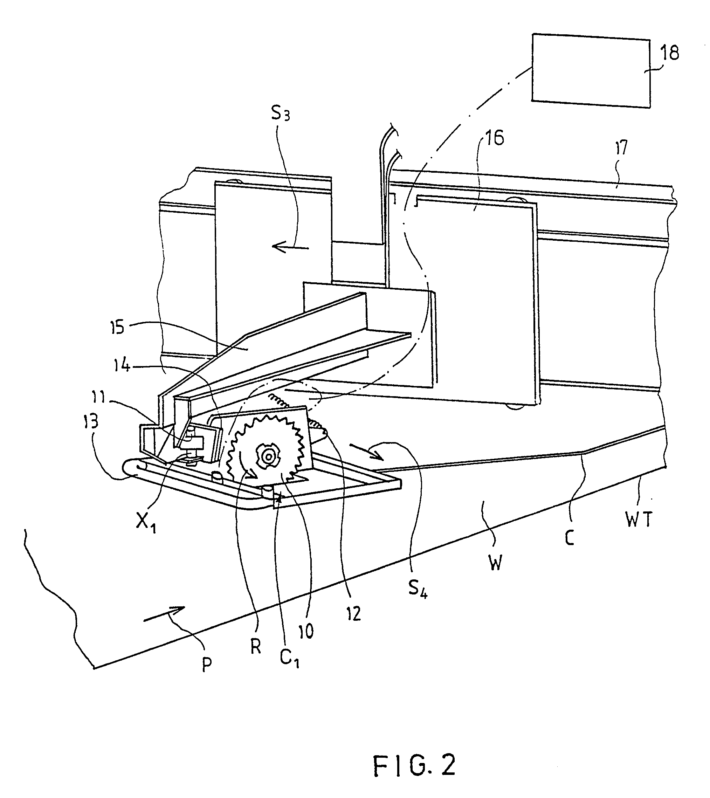

Fig. 2 illustrates a situation where the threading strip WT is being widened by cutting the web W with the cutting blade 10. In this case the carriage plate 16 moves on the guide rail 17 in direction shown by arrow $S_3$ creating a cutting line beginning from the point C in the web W as shown in figure. In this situation the slide rest 13 is turned or pivoted in the direction shown by arrow $S_4$ while the cutting blade 10 works in the direction of the cutting line beginning from the point C, that is in the cutting direction C. When the threading strip WT is being widened by cutting, the spring 12 is stretched and the slide rest 13 is detached from its rotational limit guard (not shown in figure), whereupon the cutting blade 10 is turned to be parallel to the main cutting line, and at the same time the spring 12 helps the cutting blade 10 to find without waving the correct direction during the cutting operation. Angle adjustment of the cutting blade 10 with respect to the speed of lateral movement $S_3$ and the speed of the web W takes place automatically by means of the self-controlling pivoting 11 of the cutting blade 10.

The cutting blade 10 and the geometric pivoting axis $X_1$ of the pivot pin 11 are located with respect to another in such a way that in a cutting situation the pivoting axis $X_1$ always proceeds in front of the point where the blade 10 and the web W are in contact with another. This makes the rotational position of the blade assembly stable thus resulting in a clean cut and cutting without extensive forces between the cutting blade and the web.

When the lateral movement $S_3$ ends, the spring 12 pulls the slide rest 13 of the cutting blade back against the limit guard. The carriage plate 16 together with the cutting blade can be lifted up to a non-cutting position in direction shown by arrow $S_1$ in Fig. 1.

The web cutting apparatus according to the invention can be applied especially to cutting of pulp and board webs, but it can very well be used also for cutting of other equivalent web materials.

The cutting blade 10 can be a rotary toothed disc R as shown in Figs 1 and 2, or a blade of any equivalent type capable of cutting the web in question.

The invention has been described above with reference to one advantageous embodiment only. The invention is not, however, limited to the embodiment in question but various alternatives and modifications are possible within the scope of the inventive concept defined in the following claims.

## Claims

1. A web cutting apparatus for cutting sheet materials like webs formed in pulp drying or cardboard machines, said web cutting apparatus comprising a carriage plate (16) mounted to be displaceable on a guide rail (17), which rail extends across the path of the moving pulp or board web transversely to the direction of travel (P) of the web, and which carriage plate (16) supports a slide rest arrangement (13), **characterized** in that the slide rest (13) is provided with a rotary blade (10) and the slide rest (13) is pivotally mounted (11) to be rotatable ($S_4$) parallel to the web W and relative to the moving direction P of the web, and that the pivotal axis (11) is positioned extending perpendicularly to the web plane (W) to allow the cutting blade (10) to pivot ($S_4$) in such a way that the cutting blade (10) automatically finds its optimum angle (C) depending on the movements of the web and the cross-machine movement of the slide rest.

2. A web cutting apparatus according to claim 1, **characterized** in that a spring (12) is provided which pulls the slide rest (13) against a limit stop when the slide rest is in such a position that the cutting blade (10) cuts the web (W) parallel to its moving direction (P) but which is stretched and releases the limit stop if the slide rest undertakes a cross-machine movement, and at the same time is such as to stabilize the right cutting blade angle compared with the web movement direction.

3. A web cutting apparatus according to claim 1 or 2, **characterized** in that the apparatus is displaceable along the guide rail (17) when cutting the web (W) at an angle deviating from the travelling direction (P) of the web, said movement being perpendicular to the direction (P) of travel of the material web, thus affecting the cutting blade (10) to take automatically an angle depending on the web speed and the cross moving speed ($S_3$) rotating around the pivot pin (11).

4. A web cutting apparatus according to any of claims 1-9, **characterized** in that the cutting blade (10) is supported on a support (14) of the slide rest (13) which is pivotally mounted by means of a pin (11) on the support beam (15), the axis ($X_1$) of said pivot pin being positioned upstream or in front of the cutting point ($C_1$) relative to the proceeding of the cutting operation.

5. A web cutting apparatus according to claim 4, **characterized** in that said pivot axis ($X_1$) is positioned at a distance from the plane of the cutting blade (10) rotation, to one side thereof.

6. A web cutting apparatus according to any of claims 1-5, **characterized** in that the mounting is such that the lateral force between the web (W) and the cutting blade (10) causes the blade (10) and the slide rest (13) to rotate around the pivoting axis ($X_1$).

7. A web cutting apparatus according to any of claims 1-6, **characterized** in that the cutting blade (10) is a rotary saw blade.

8. A web cutting apparatus according to claim 7, **characterized** in that the cutting blade (10) is driven by a separate motor (18).

9. A web cutting apparatus according to claim 8, **characterized** in that the drive motor (18) of the cutting blade 10 is of pneumatic, electric or hydraulic type.

10. A web cutting apparatus according to any of claims 1-6, **characterized** in that the slide rest (13) is pivotally supported and rotatable ($S_4$) in the plane of the web (W) to be cut.

FIG. 1

FIG. 2